Europäisches Patentamt

European Patent Office

Office européen des brevets

(11) Publication number: **0 239 203 B1**

## EUROPEAN PATENT SPECIFICATION

(45) Date of publication of patent specification: **22.04.92**

(21) Application number: **87300904.7**

(22) Date of filing: **02.02.87**

(51) Int. Cl.⁵: **A23L 1/325**, A22C 25/00, A22C 7/00, A22C 29/00

(54) **Method and apparatus for producing a food product.**

(30) Priority: **25.03.86 JP 67692/86**
**30.06.86 US 879984**

(43) Date of publication of application:
**30.09.87 Bulletin 87/40**

(45) Publication of the grant of the patent:
**22.04.92 Bulletin 92/17**

(84) Designated Contracting States:
**DE FR GB**

(56) References cited:
**US-A- 4 303 008**
**US-A- 4 692 341**
**US-A- 4 720 391**

**PATENT ABSTRACTS OF JAPAN, vol. 5, no. 24 (C-43)[696], 13th February 1981; & JP-A-55 150 880 (ISAO MURAMATSU)**

**Ullmann's Enzyklopädie der technischen Chemie, 1976, Band 12, S. 276**

(73) Proprietor: **KABUSHIKI KAISHA IKEUCHI TEK-KOSHO**
**1-9-9 Tamachi**
**Akashi 673(JP)**

(72) Inventor: **Ikeuchi, Hiroji**
**1-9-17 Tamachi**
**Akashi 673(JP)**
Inventor: **Ikeuchi, Kiyoaki**
**1-9-17 Tamachi**
**Akashi 673(JP)**

(74) Representative: **Hayward, Denis Edward Peter et al**
**Lloyd Wise, Tregear & Co. Norman House**
**105-109 Strand**
**London WC2R 0AE(GB)**

# Description

The present invention relates to a method and apparatus for producing a food product having the appearance of the shelled meat of various shellfish, and for molding and applying a coloring simulating the natural color of the product, produced mainly from a paste of ground fish meat.

It is known in the prior art to make a simulated shellfish, such as shrimp, crab claws, lobster and abalone, from a fish paste. For example, a paste of ground fish meat has been formed into a flat sheet, cut into thin bar-like shapes, gathered together and cooked, and colored to form bars having the appearance of crab legs (Kanikamaboko, for example). This type of technology is described in Japanese patent provisional publication no. 60-180564 laid open September 14, 1985 and in our U.S.-A-4622228.

In addition, U.S. patent no. 4,303,008 issued on December 1, 1981 to Nice et al. describes a method and apparatus for comminuting small pieces of a food product into a paste form, injecting this paste under pressure into molds with high thermal conductivity, heating the paste while it is kept at high pressure, and then removing the food product from the molds.

In accordance with this U.S. patent, the paste must be injected into the molds under pressure and then kept at high pressure during the heating process, thus requiring a system wherein the mold compression and the pressure are maintained, and also producing a food product which is too uniform in shape to resemble the actual shelled meat of shellfish, consequently failing to make the food product sufficiently appetizing.

To color the surface of such a food product with a food coloring to reproduce the natural color of the real shellfish, it has been common practice to wrap the shaped paste in a polyethylene film, the inner side of the film having been coated with a red food coloring, and then boil or steam the product so as to cook and transfer the coloring to the paste.

Although it has been sufficient to simply shape the fish paste into bars or cylinders and cut it into appropriate lengths, up until this invention there has been no method and apparatus for processing ground fish meat in order to produce fish-paste products having the true appearance of the shelled meat of shrimp, crab claws, lobster, and other shellfish.

While the prior art color transfer technique described above is useful in the coloring of bar-shaped products, it cannot be successfully applied to foods having intricate shapes such as simulated shrimps which have joints, for the food coloring cannot be evenly transferred, by the prior art method, to such irregular surfaces to faithfully reproduce the appearance of shrimp and the like.

It is a general object of the present invention to achieve a method and apparatus for forming and coloring a simulated shellfish food product such as a shrimp, a claw of a crab, or the like, which makes basic improvements on the described prior art systems.

According to the invention, there is provided apparatus for producing a molded food product with the appearance of the shelled meat of a crustacean, comprising a split mold with at least one internal cavity having the shape of the shelled crustacean to be molded, and a fill opening through which fishmeat paste is charged into the mold cavity, characterised by a fixed quantity filling unit adapted to be applied to the fill opening of the mold to charge the mold cavity with a predetermined amount of fishmeat paste and further characterised in that the walls of the mold cavity are formed by flat portions separated by striations, one end of the mold cavity thus shaped to mold the simulated crustacean extends right out to the external surface of the mold to form the fill opening, whereby the fishmeat paste in the fill opening forms one end of the molded product without waste, and the other end of the mold cavity terminates in a vent opening at the external surface of the mold.

The invention further provides a process for molding a food product having the appearance of the shelled meat of a crustacean, comprising providing a split mold with a mold cavity formed to the shape of the crustacean, charging the mold cavity with fishmeat paste, heating the paste in the mold cavity and then opening the mold to remove the food product, characterised in that to simulate the jointed body of the crustacean the walls of the mold cavity are formed by flat portions separated by ribs or striations, one end of the mold cavity so formed extends right out to and is open at the surface of the mold to provide a fill opening without the need for a mold runner and the other end of the mold cavity communicates with a mold vent, and a food product coloring agent is injected into the mold cavity through the fill opening before the mold cavity is charged with fishmeat paste after which a sufficient predetermined quantity of paste is pressed into the mold cavity to fill it through the fill opening by a filling unit that is removed from the mold after charging so that during the heating step the fill opening is uncovered.

Thus, whereas in the prior art the means for injecting the food paste into the mold cavities has remained connected in place while the molded food products were subsequently heated, in the present process that is not the case, the injection means being separated from the molds except during the injection process.

The invention will be better understood from the following detailed description taken in conjunction with the accompanying figures of the drawings, wherein:

Fig. 1 is a view of a half of a mold for use in practising the invention;

Fig. 2 is a perspective view showing the mold in the closed position;

Fig. 3 is a perspective view showing the mold in the open position;

Fig. 4 is a schematic diagram of apparatus for practising the invention;

Fig. 5 is an enlarged view in section showing a part of the apparatus of Fig. 4;

Fig. 6 is a plan view showing split molds of production apparatus, in the open state;

Fig. 7 is a plan view showing the split molds in the closed state;

Fig. 8 is a side view of the split molds;

Fig. 9 is a side view showing apparatus for moving the molds;

Fig. 10 is an enlarged side view showing the mold opening/closing guide section of the apparatus;

Fig. 11 is a frontal view partially in cross section of a mold and the support apparatus for that mold;

Fig. 12 is a side view from the right side of Fig. 11;

Fig. 13 is a cross-sectional view along the line 13-13 in Fig. 11;

Fig. 14 is a frontal view showing the apparatus for supplying the fish paste;

Fig. 15 is a plan view of the apparatus shown in Fig. 14;

Fig. 16 is a side view partially in cross section of the apparatus for extruding the fish paste;

Fig. 17 is a side view partially in cross section of the paste filling unit and the nozzle;

and Fig. 18 is a side view partially in cross section showing the operation of the nozzle.

The production apparatus to be described is used to inject under pressure a paste of fish meat or the like into molds, apply heat, and then remove the food product. The molds are constructed in such a manner that the internal cavity is formed in the shape of a crustacean animal, such as the torso of a shrimp, the claws of a crab, or the body of a lobster.

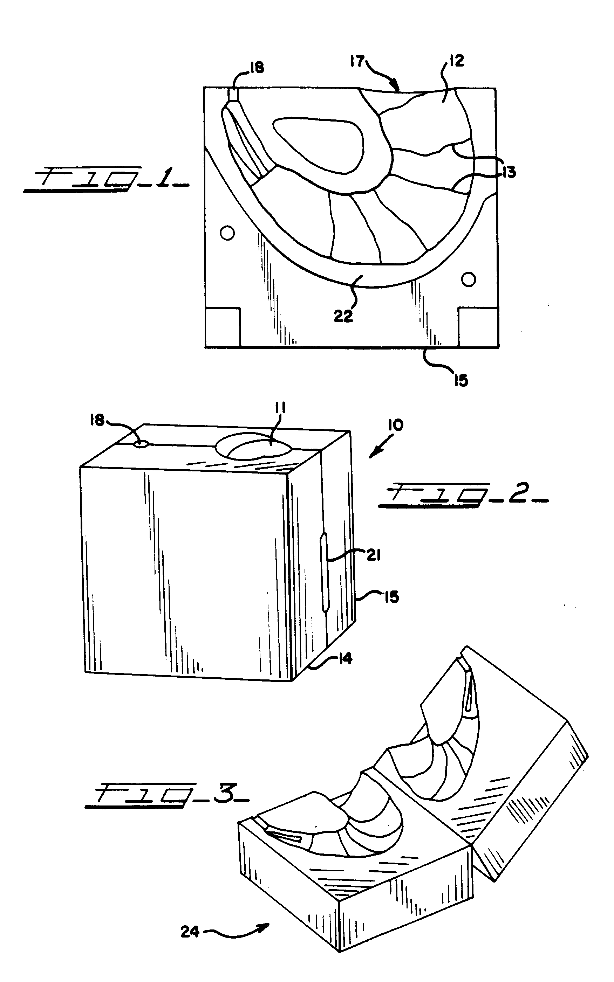

The body of a crustacean animal, or shellfish, such as shrimp, crab, prawn or lobster, has an articulation or joint system for contracting and extending its body segments, and its carcass also shows a plurality of joints. With reference to Figs. 1-2, in a metal mold 10 having a mold cavity 11 conforming to the shape of such a carcass, the segments 12 of the body and the joints 13 separating them are reversedly reproduced in the inside wall of the mold cavity. Figs. 1-3 show a mold for producing a shrimp-shaped food product, and the cavity wall includes flat portions 12, with the joints being formed as crosswise projecting striations 13 (hereinafter referred to as projections). The mold 10 is split to form two halves 14 and 15, and the inside wall of the split metal mold is preferably Teflon (Registered Trade Mark) coated so that the finished food product may be easily released and removed from the mold. The two ends of the cavity 11 appear at the surface of the mold and form two filling openings 17 and 18 which are preferably on the top side of the mold.

The mold halves 14 and 15 which constitute the split mold are closed and the crustacean meat paste is fed into the cavity 11 through the larger opening 17. Prior to this filling operation, the inside wall of the mold cavity 11 is sprayed with an aqueous solution or dispersion of food coloring. The coloring is added when the mold halves are closed and the spray enters the larger opening 17. The coloring so applied is deposited on the inside wall, but since the projections 13 of the inside wall act as barriers to the inflow of the coloring spray, there is formed a pool of the coloring in the portion of the segment 12 on upstream side of the projection, while the portion of the segment 12 behind each projection 13 is substantially clear of the coloring. The resulting uneven coloration of the mold cavity wall due to the projections 13 gives an appearance closely resembling that of the actual crustacean. The meat paste is then fed into the mold cavity 11 under pressure and the mold is heated to cook and solidify the product. Finally, the metal mold is opened to remove the finished food product.

In the case of a mold for the manufacture of a paste food product simulating a shrimp, the cross section of the mold cavity is diminished towards the tail portion which connects to the smaller opening 18, so that the meat paste fed into the cavity through the opening 17 is subjected to a progressively increasing velocity of feed. The result is that a relatively large proportion of the coloring previously deposited on flat portions 12 of the cavity wall is carried away by the meat paste flowing toward the tail portion. Consequently, the meat paste filling the tail portion of the cavity is colored with the deepest shade while the surface of the meat paste ultimately filling the flat portions 12 is stained only faintly red because much of the coloring has been substantially depleted. Moreover, the zones of the flat portions 12 behind the projections 13 are little stained because, after packing the meat paste up to the tail portion, the former zones are filled with the meat paste along the inner wall under the internal pressure of the mold, with the result that the contrast of the color densities at the joints of the shrimp are faithfully reproduced.

Since the inner wall of the metal mold is Teflon coated as previously mentioned, the food product can be neatly removed from the mold. The food product thus formed and colored has a sufficient density of color contrast where it is needed and gives a sensory quality approaching that of real crustacean meat.

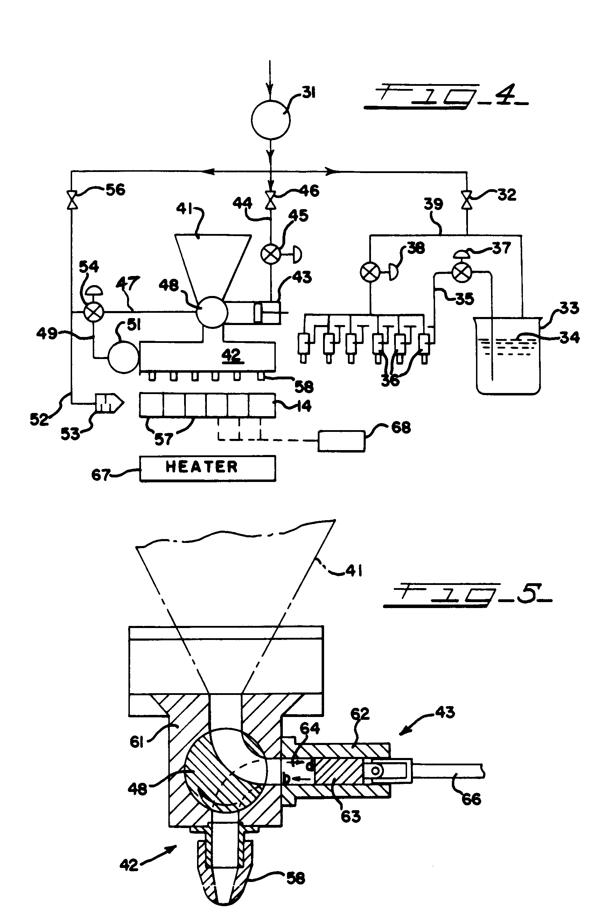

With reference to Figs. 1 and 2, the two mold halves 14 and 15 are pivotally connected together by a hinge 21. The reference numeral 22 in Fig. 1 indicates a Teflon lining in the mold halves. Suitable pins and holes may be provided to properly align the mold halves when they are closed.

The small opening 18 forms a vent hole which releases the trapped air from the cavity into the atmosphere as the meat paste fills the cavity. The food coloring is an aqueous solution or dispersion of food color which is sprayed in mist form into the mold cavity through the large opening 17 by means of a spray nozzle (not shown in Figs. 1 and 2).

Thus, in accordance with the present invention, one is able to manufacture a food product having a sensory quality resembling that of real crustacean meat, from a raw material composed of meat paste, a binding agent and so on. It should be understood that the above described production technique can be equally well applied to the manufacture of other paste foods simulating the claw of a crab, the carcass of a lobster, and so on.

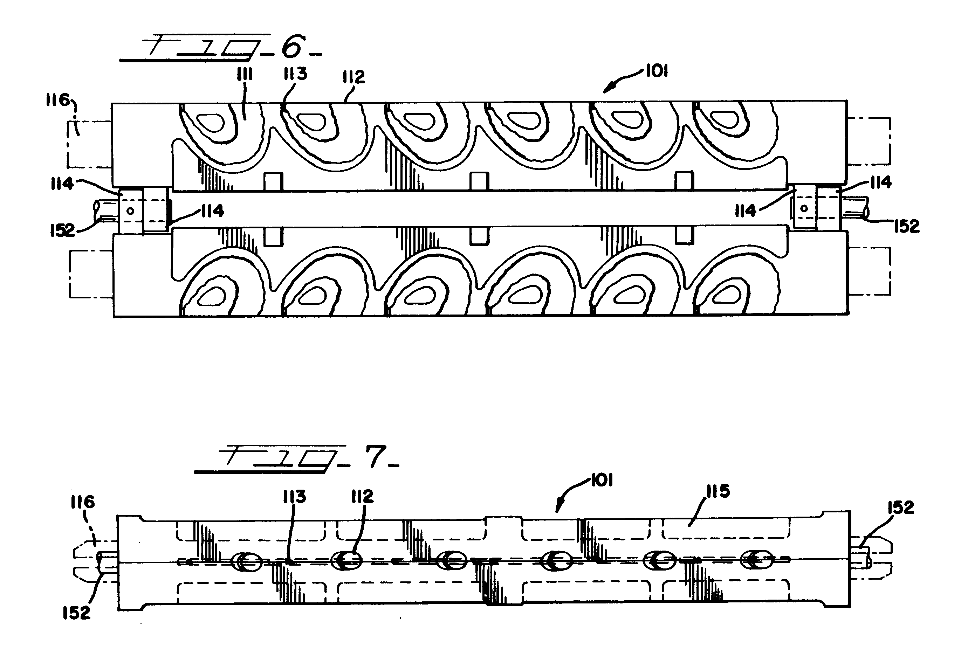

Fig. 3 shows a mold 24 similar to the mold 10 but without a Teflon lining for the mold cavity. The entire mold may be made of a non-stick material such as Teflon or only a thin coating in the cavity may be provided. In addition an oil-based release agent may be sprayed on the inside of the mold prior to filling it with a meat paste.

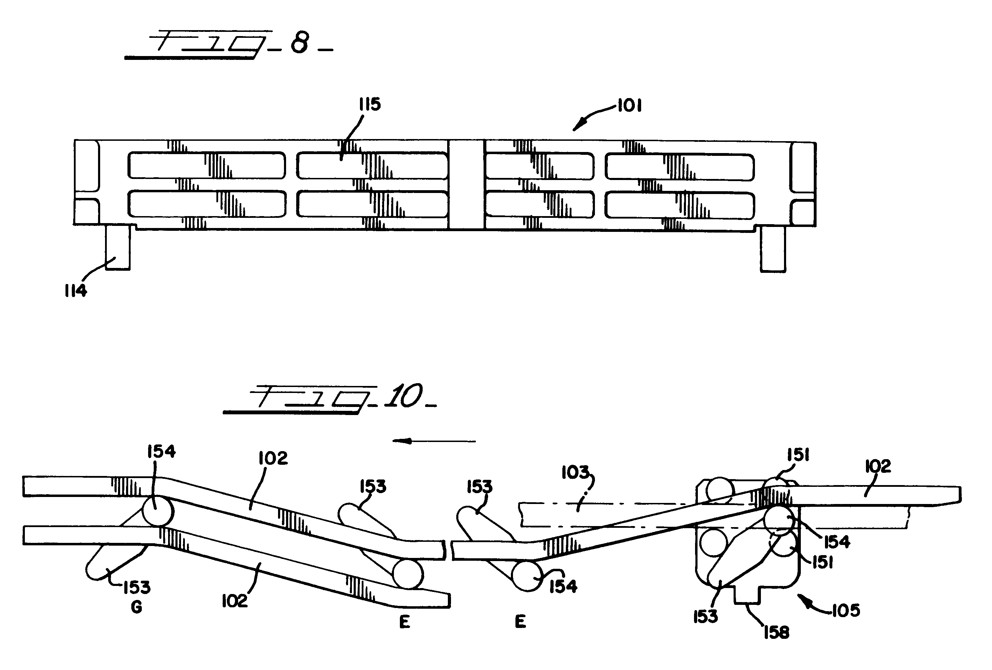

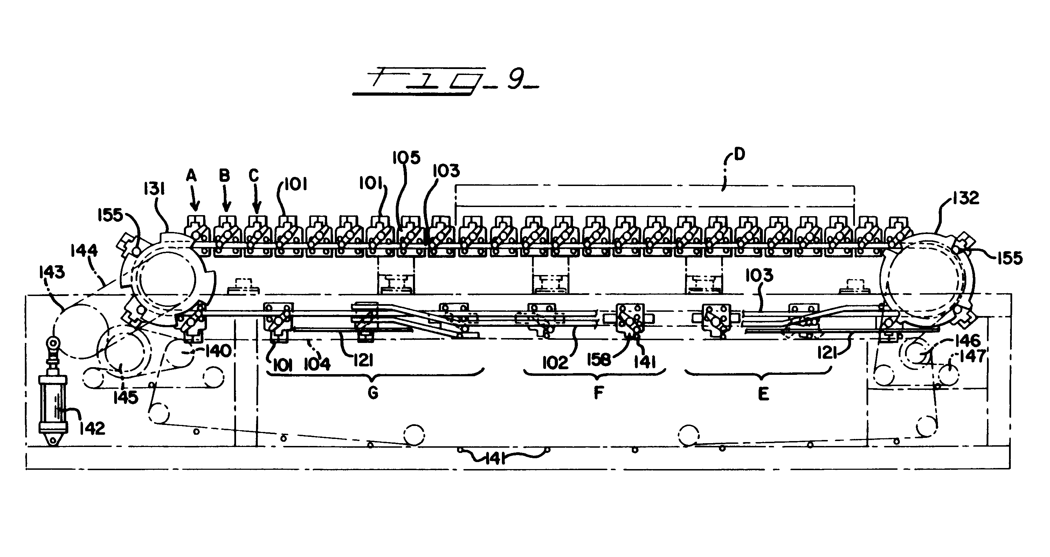

Figs. 4 and 5 are schematic diagrams showing automated machinery for making food products in accordance with the above described process and using the described molds. The machinery shown in Fig. 4 utilizes air pressure for operating the various parts of the machine.

The compressed air used to drive the machine is supplied by an air compressor 31 at a pressure of approximately 7kg/cm². One branch of the pressurized air line is connected through a shut-off valve 32 to the interior of a closed coloring agent tank 33 and applies pressure to the liquid coloring agent 34 inside the tank. A liquid line 35 carries the coloring agent from the tank 33 to each of a plurality of spraying nozzles 36 and a control valve 37 in this liquid line 35 operates in conjunction with a control valve 38 in an air line 39 also connected to the spraying nozzles 36. The air line 39 is connected so that the air is guided to the spraying nozzles via the control valve 38 and the coloring agent is sprayed from the nozzles 36.

In addition, a hopper 41 is filled with the raw paste of ground fish meat, which is fed to a filling unit 42 by an extruder 43. An air line 44 is connected to the extruder 43 via a control valve 45 and a shut-off valve 46. In addition, an air line 47 is connected to a switch valve 48 (better shown in Fig. 5) on the hopper, an air line 49 is connected to the filling unit's control apparatus 51, and an air line 52 is connected to a cleaner 53 which cleans the molds. A control valve 54 is connected to the lines 47 and 49 and a shut-off valve 56 is connected to the lines 47, 49 and 52. Multiple molds 57 are arranged in a row so that the large filling openings in the molds are positioned directly beneath a plurality of filling nozzles 58 of the filling unit 42. The positional relationship of the filling unit 42 and the metal molds 57 changes as the operation progresses.

Each of the molds 57 has the construction of the molds 10 or 24 and has a cavity in, for example, the shape of a shelled shrimp as shown. Each mold 57 may contain a single cavity or it may contain several cavities. The filling unit 42 includes a publicly known fixed-amount filling apparatus (in other words, as shown in the Collection Of Commonly Known Popular Technology (page 21) published by the Japanese Patent Office on February 20, 1980)

This filling unit is shown in more detail in Fig. 5. A casing 61 part of the filling unit has the hopper 41 attached to the top of it, and inside the casing 61 there is the switching valve 48 which connects the piston case 62 of the extruder 43 located at the side of the casing 61 with the hopper 41 and with each of the discharge nozzles 58 as appropriate. The valve 48 has a rotary valve member switching between two positions, one where the member connects the hopper with the piston chamber 64 and another where it connects the chamber 64 with a nozzle 58. The valve member is rotated between its two positions in synchronism with the movement of the pump piston 63, by the air pressure in the lines 44 and 47 under the control of the valves 45 and 54. When the piston 63 moves in the direction indicated by arrow d (toward the right), the switching valve 48 connects the hopper 41 with the piston chamber 64, thus filling the piston chamber with a fixed amount of the fish paste. Next, the switching valve 48 switches to connect the piston chamber with a nozzle 58 and the piston 63 moves in the direction indicated by arrow b (toward the left), thus causing the fixed amount of the fish paste to be forced out through the nozzle 58.

The piston 63 is connected to a rod 66 of a conventional pneumatic cylinder (not shown) which moves the piston 63 back and forth as described.

In the specific example shown in the drawing, six molds 57 are movably mounted underneath the filler 42 which includes an equal number of nozzles 58. The control 51 operates the filling unit 42 to vertically move the unit 42 relative to the molds 57. One valve 48 is provided for each nozzle 58. The filler 42 operates to feed doses of the fish meat simultaneously for all of the nozzles 58. The spraying nozzles 36 are also equal in number to the molds, and the spacing of the molds is equal to the spacing between adjacent meat nozzles 58 and adjacent color spraying nozzles 36.

In the first step of the production process, the ground fish meat, starch which is used as a caking agent or binder, and small pieces of fish-paste food product which make the product more appetizing, are blended together inside the hopper 41. A release agent (an oil-based release agent which is commonly used in food production) is preferably applied to the inside walls of the mold cavities, the two halves of each mold are fastened together, the molds are positioned under the nozzles 36, and then the food coloring agent 34 is sprayed onto the mold cavities. The color of the coloring agent is selected according to the product being produced.

Next, the molds are moved under the nozzles 58 and the filling unit 42 is operated, causing the raw fish paste to be forced through the nozzles 58 and into the molds. Thus, the fish paste is formed into the shape of the shelled meat of a selected shellfish. The filled molds 57 are then heated by steam or gas roasting to approximately 80 to 90°C for about 1 to 1.5 minutes by a conventional heating apparatus 67 thus heating and solidifying the fish paste inside the molds; the molds are then cooled and the products can be removed at a temperature of approximately 60°C. Next, the two-piece molds 57 are opened and turned upside down by a mechanism 68 connected to the molds, causing the food products to fall into a suitable receptacle; any products which have adhered to the inside walls of the molds and do not immediately fall out may be scraped out by using a rotating roller brush of the mechanism 68 (not shown in the drawings).

The metal molds 57 are then cleaned by the cleaner 53 which directs a cleaning solution on the molds and by using a brush and hot water spray, and the entire process is repeated over and over again. A closed-loop conveyor may be provided whereby the raw materials are supplied from one end while completed products are automatically removed on the other end.

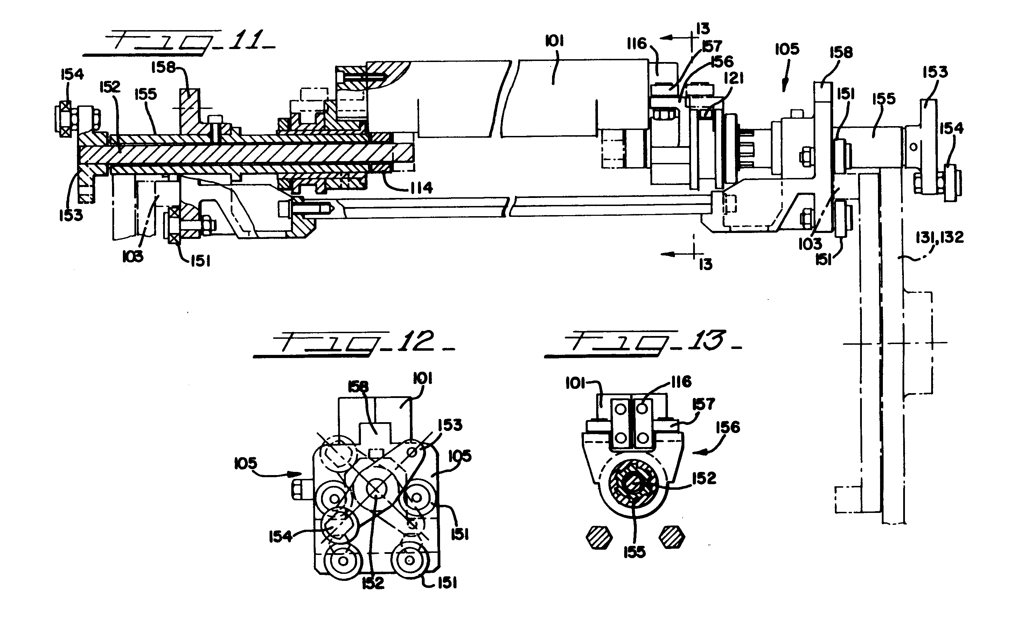

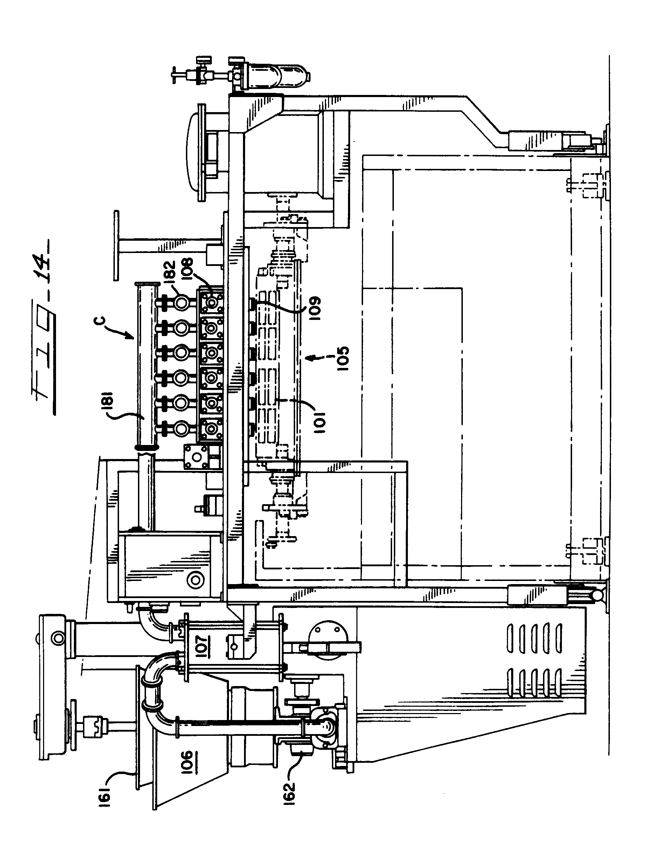

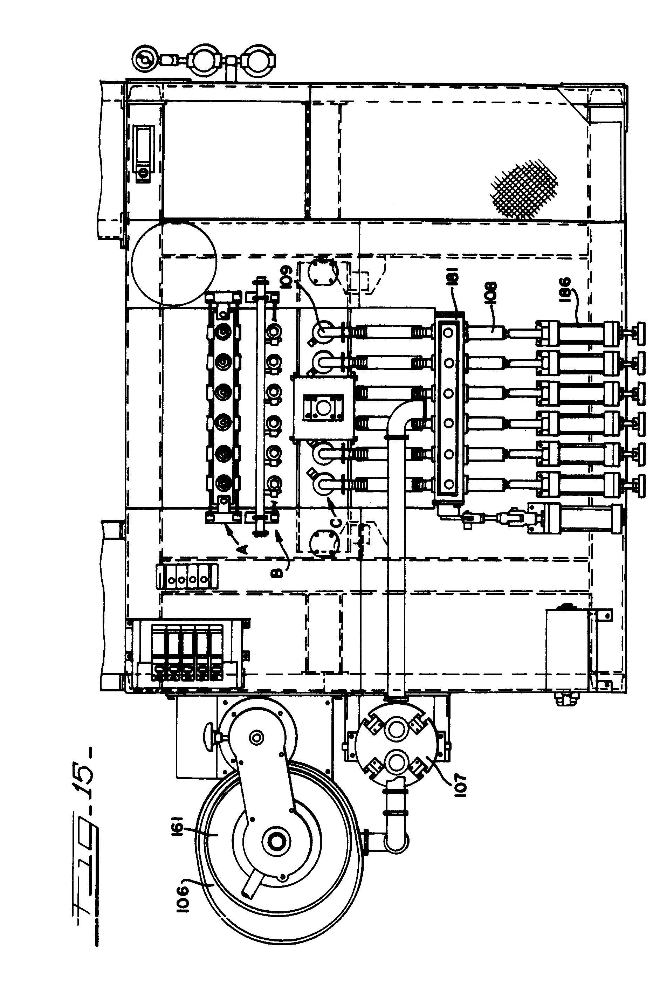

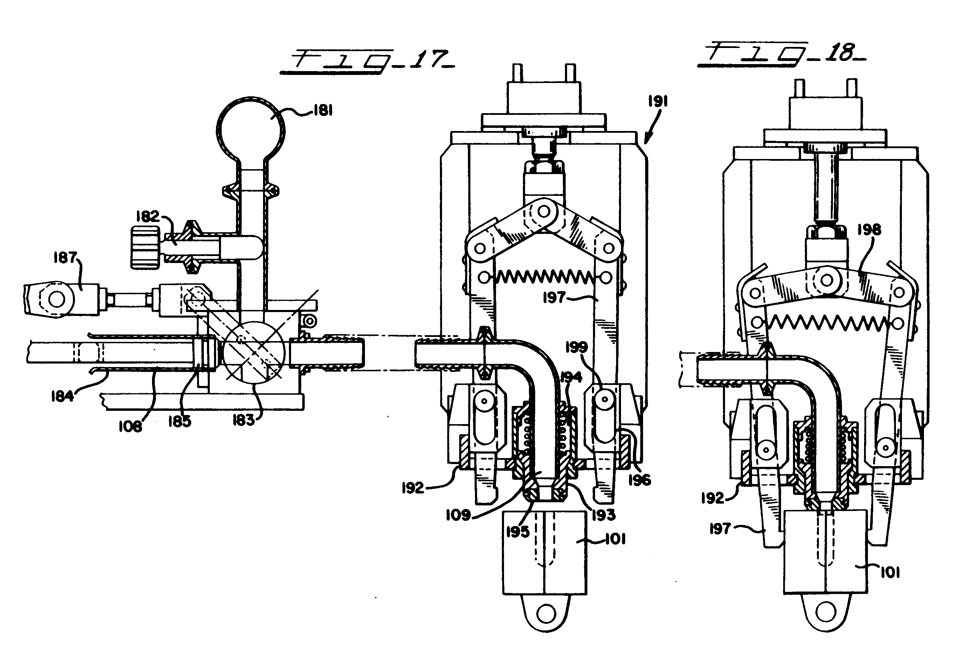

Figs. 6 to 18 show large quantity production apparatus in accordance with this invention. Referring to Figs. 6, 7 and 8, cavities 111 (formed in the shape of the shelled meat of shrimp), paste injection ports 112, and air escape holes 113 are formed on the inside of each split mold 101. Hinges 114 are provided for opening and closing of the molds. External recesses 115 are provided in the mold halves in order to reduce the thickness of the molds, thus allowing them to be heated from the outside. When filling the cavities 111 with a paste made from ground fish meat, the two halves of the split molds are closed and the paste is injected under pressure into the cavities 111 through the paste injection ports 112. The air inside the cavities 111 at the time of injection is forced out through the air escape holes 113. The paste inside the cavities 111 of the molds 101 is heated so that it solidifies, and then the molds 101 are split in half to remove the finished food product. After the food product is removed, the molds are cleaned and then reused over and over again. The inside walls of the cavities 111 of the molds 101 are preferably Teflon coated so that the finished food product may be easily released and removed from the molds 101.

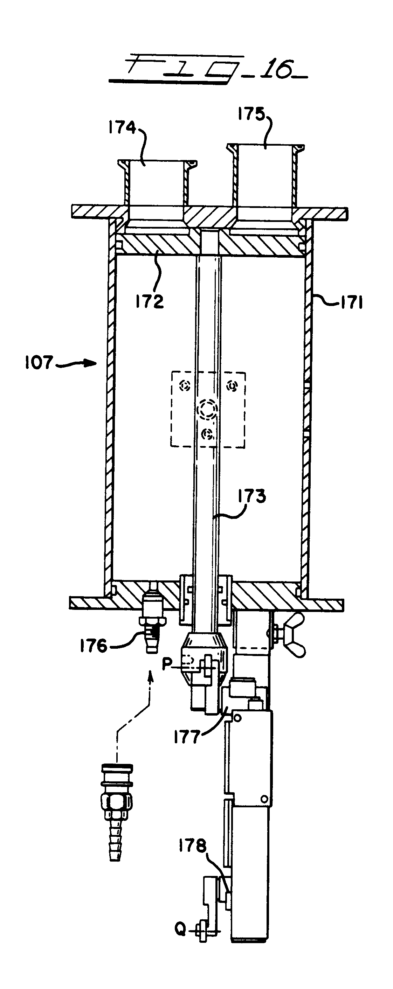

In Fig. 9, a succession of molds 101 are mounted side by side on support apparatus 105 and travel stepwise along a pair of parallel endless tracks 103, the molds 101 being positioned between the two tracks 103. The movement of the molds 101 in the upper run, toward the right as viewed in the Figure, is accomplished by pairs of intermittently rotating discs 131 and 132 located at either end of the run of the tracks 103, the molds being consecutively pushed along on the upper run of the tracks. When the piston of a cylinder 142 is extended, the end of the piston rod acts upwardly at the periphery of a drive wheel 143 and turns it, each upward stroke of the piston corresponding to one-quarter of a clockwise revolution of the drive wheel. During downward strokes of the cylinder 142 the drive wheel 143 is held stationary. The intermittent rotation of the drive wheel 143 is transmitted to the discs 131 via a belt 144, thus causing the discs 131 to rotate clockwise one-quarter of a revolution at a time. The rotation of the discs 131 is also transmitted to a pulley 145 via another belt, thus causing it to rotate intermittently as well, but anticlockwise, and this pulley 145 in turn rotates a drive wheel 140 of a conveyor 104 anticlockwise via a further belt. The conveyor belt 104 thus travels stepwise and its upper run, moving towards the left in Fig. 9, conveys the molds 101 during their travel leftwards along the lower run of the tracks 103. At the end of its run remote from the drive wheel 140, the conveyor belt 104 drives a pulley 146 which in turn transmits drive, via a belt wrapped around jockey pulleys 147, to the discs 132, causing them to rotate one-quarter of a revolution at a time in synchronism with the discs 131.

The discs 131 have four peripheral abutments which pick up pairs of laterally projecting pins 155 of the support apparatus 105 of each mold 101, so that as the discs rotate the molds are transferred and lifted one by one from the left hand end of the lower run of the tracks 103 and the conveyor 104 to the upper run of the tracks 103. At the opposite end, the discs 132 have four peripheral notches to receive the pins 155 of the mold support apparatus and transfer the molds downwardly one by one from the right hand end of the upper run of the tracks 103 to the lower run of the tracks and the conveyor 104. Whereas the molds 101 are close together along the upper run of the tracks 103, they are spaced quite widely apart and travel more quickly along the lower run. Positive driving of the molds along the lower run by the belt 104 is achieved by means of equidistant strakes 141 on the belt that engage the lower parts of a pair of side brackets 158 of each mold support structure 105.

Referring to Figs. 11 to 13, each support apparatus 105 is supported and guided on the two tracks 103 by upper and lower rollers 151 arranged in four pairs, two at each side. These rollers are mounted on the aforementioned side brackets 158 the lower parts of which brackets are connected to one another by horizontal tie bars extending below the mold 101 while their upper parts constitute trunnions with bearing portions through which the laterally projecting pins 155 pass. The pins 155 which are non-rotating and hollow extend both inwardly and outwardly of the trunnion bearings of the brackets 158 and through these pins pass a pair of horizontal shafts 152 the inner ends of which support the opposite ends of the split mold 101. The inner ends of the shafts are secured to hinge portions 114 of respective halves of the mold 101, that is to say one shaft is secured to a hinge portion of one mold half and the other shaft to a hinge portion of the other mold half, and the shafts are free to rotate in the hollow pins 155. Thus if the two shafts are oppositely rotated the two mold halves are swung in opposite directions and the mold can be opened and closed. To the outer end of each of the shafts 152 is mounted an opening/closing lever 153 at a right angle to the shaft 152, and the swinging of each lever 153 through 90° causes one half of the mold to swing 90°. The mold is opened and closed by swinging the left and right levers 153 in opposite directions simultaneously. The swinging of the levers 153 is accomplished by the operation of a cam roller 154 provided on the end of each lever 153 and actuated by a pair of camming guides 102 (Figs. 9 and 10) between which the roller is constrained to run.

There are mold locking devices 156 mounted on the pins 155 between the side brackets 158 and the mold 101; when the mold 101 is closed, these locking devices 156 move close to the mold 101 and pairs of rollers 157 thereon clamp together pairs of ears 116 projecting from the ends of the halves of the split mold 101 thereby to lock the mold closed. When the mold 101 is to open, the locking devices 156 recede outward to the positions indicated by the broken lines in Fig. 11. The pins 155 and the locking devices 156 are in splined engagement such as to allow relative movement in the axial direction without rotation. The locking and unlocking travel of the mold locking devices 156 is accomplished by cam rails 121 as will be described hereinafter.

Referring to Figs. 14, 15 and 16, the ground fish meat is processed into a paste by the mixer 161 and accumulated in the hopper 106. In Figs. 15 and 9, A indicates the position of the nozzles for the supply of a mold release agent, B indicates the location of the nozzles for the supply of a coloring agent, and C indicates the location of the nozzles for the supply of the fish paste. The fish paste is fed under pressure from the hopper 106 into the paste extruder 107 by a pump 162. The cylinder 171 (Fig. 16) of the extruder 107 contains a piston 172. The fish paste is introduced into the cylinder 171 above the piston 172 and compressed air at a fixed pressure is introduced below the piston 172. The position of the piston rod 173 is detected at the piston's upper limit P and lower limit Q. The numeral 174 is the fish paste inlet, 175 is the fish paste outlet, and 176 is the inlet for the introduction of compressed air.

When the piston rod 173 reaches the upper limit p, it engages a limit switch 177 and the pump 162 begins to pump the fish paste. The pump 162 supplies the cylinder 171 with an amount of fish paste greater than the filling units 108 described hereinafter can process at any one time. When the piston rod 173 then subsequently engages the limit switch at the lower limit Q, the pump 162 stops pumping, and the fish paste contained in the cylinder is then supplied through the outlet 175 to the filling units 108 by the pressure of the compressed air acting on the piston 172. The number of filling units 108 is the same as the number of fish paste injection ports 112 of one mold 101. These filling units 108 branch off a common header 181, to which they are connected via respective switching valves 183 (Fig. 17) and flow control valves 182. Fig. 17 shows a filling unit 108 and a nozzle 109 in the coupled state. When the switching valve 183 is switched by an actuator 187, the path to the nozzle is closed, the filling unit 108 is connected to the header 181, and the fish paste is supplied to the filling unit 108 by the pressure of the cylinder 171 (Fig. 16) of the paste extruder. Each filling unit 108 is comprised of a cylinder 184, a piston 185, and a pneumatic apparatus 186 (Fig. 15) which operates the piston.

For injection of fish paste into a mold 101, the nozzles 109 descend and come into close contact with the top of the mold 101. If the number of cavities along the mold into which the fish paste is to be injected is large, the mold will be a long one, and the center of the mold could bow open slightly even if both ends of the mold are held tightly by the locking devices 156. Therefore, a securing apparatus 191 is provided which prevents the mold from opening during injection of the fish paste. Each of such apparatus has a nozzle-mounting base 192 on which the nozzle assembly is carried, and this base moves up and down together with the nozzle 109. The nozzle assembly comprises a holder fixed to the base 192 and a nozzle member 193 which is vertically movable in the holder and urged downwardly by a spring 194. The nozzle member 193 has a nozzle pad 195 at its tip and when the nozzle pad 195 contacts the top of the mold 101 the action of the spring 194 causes the pad to be resiliently pressed tightly against the top of the mold and the mouth of the nozzle is aligned with the paste injection port 112. The nozzle pad 195 may be made of a silicone compound.

As shown in Figs. 17 and 18, a pair of substantially vertical levers 197 on opposite sides of the nozzle assembly are coupled to the base 192 by means of rollers 199 on the levers 197 which rollers run in vertical slots 196 in brackets on the base. At their upper ends the levers 197 are connected by articulated links 198 to a vertical actuating cylinder. When the cylinder retracts the levers 197 are raised, the rollers 199 run to the tops of the slots 196 and then the nozzle assembly on the base 192 is lifted away from the mold 101 (Fig. 17). When the cylinder extends, the nozzle assembly is lowered on to the mold 101, the rollers 199 run to the lower ends of the slots 196 and then the nozzle is pressed down on to the mold with compression of the spring 194. At this stage, the articulated links 198 begin to straighten with the result that the lower ends of the levers 197, which act as opposed jaws, move inward toward one another and thereby clamp the sides of the mold 101 (Fig. 18). After the fish paste is injected into the mold, the cylinder is retracted, the clamping pressure of the two levers is released and the base 192 ascends.

In Figs. 9 and 10, the cam rails 121 which operate the mold locks 156 and the camming guides 102 which control the opening and closing of the molds, are positioned generally parallel along the tracks 103 at the locations shown.

The molds 101 move along the tracks 103, and the process by which the molded food product is produced from fish paste proceeds in the order A→B→C→D→E→F→G. The corresponding locations are indicated in Figs. 9 and 10. At E, F and G, the cam rails 121 run at outwardly displaced positions so that the mold locking devices 156 shown in Fig. 11 are shifted outwardly to unlock the molds 101, and at all other locations the cam rails 121 are located at their inward positions so that the locking devices 156 lock the molds. In addition, between the locations E and G the cam guides 102 are cranked in order to cause the opening/closing levers 153 to swing through 90°, as best shown in Fig. 10, and thereby open the molds 101. As can be seen in Fig. 9, the molds are opened as they enter the region E and closed as they enter the region G.

The following is a description of the production process. First, ground fish meat, starch which is used as a binding agent, and small pieces of fish-paste food product which make the product more appetizing, are blended together and accumulated inside the hopper 106 as the raw paste. A mold release agent (an oil-based release agent which is commonly used in food production) is applied to the walls of the cavities 111 of the closed molds 101, and a food coloring agent is sprayed inside the cavities 111. The color of the coloring agent is selected according to the product being produced.

Next, the filling unit 108 is operated in order to fill the cavities with raw fish paste through the nozzles 109. The fish paste is thus formed into the shape of the shelled meat of the selected shellfish by the shape of the cavities. The filled molds 101 are then heated by a gas roasting process to approximately 80° to 90°C for 1 to 1.5 minutes by a heating apparatus (not shown), thus heating and solidifying the fish paste contained in the mold cavities. If steam is used to heat the molds, the protruding parts of the food product have a tendency to be too soft. The molds then having reached the end of the top run of the tracks 103, they are turned upside down as they travel around the discs 132 down to the lower run of the tracks. The products can then be removed from the molds at a temperature of approximately 60°C by opening the molds and allowing them to fall out. Using a roller brush (not shown), any products which have adhered to the mold cavities 111 and have not fallen away can be brushed out.

The molds 101 are next cleaned by spraying them with a cleaning solution and hot water and using a brush (not shown), and then the entire process is repeated. By moving the molds around a closed loop making use of the conveyor apparatus, the raw materials can be supplied at one station and the finished products automatically removed at another station.

In Fig. 9, the molds 101, prepared for re-use along the bottom run of the tracks 103 and closed at the region G, travel up around the discs 131 to the top run of the tracks 103.

At location A, the mold release agent is sprayed into the cavities 111 of the closed molds, and the molds are then moved on to location B, where the coloring agent spray nozzles (Fig. 15) descend, spray the coloring agent into the cavities, and ascend.

At location C, the nozzles 109 for injecting the fish paste descend to fit tightly against the mold's paste injection ports 112, and the fish paste is injected into the cavities. As shown in Figs. 6 and 7, the air inside the cavities 111 is discharged out through the air escape holes 113 and the fish paste fills the cavities entirely. After the injection nozzles 109 inject the fish paste into the cavities 111, they ascend, and the fish paste breaks off above the mold.

Region D is the heating section where gas roasting is used to apply heat from outside the molds and heat the molds to about 80 to 90°C for approximately 1 to 1.5 minutes, thus heating and solidifying the fish paste. Because the mold's injection ports are open at this time, as the fish paste solidifies, the configuration of the fish paste at the injection ports differs slightly for each mold cavity, thus allowing the products to closely resemble individual shrimp with slight differences in their broken surfaces.

Next, the molds are transferred to the bottom run of the tracks 103 and inverted by the rotating discs 132. At region E, the cam rails 121 release the mold locks and the camming guides 102 activate the mold opening/closing levers 153 so that the shafts 152 rotate to swing the mold halves open about their hinges 114. The mold being upside down at this time, the heated and solidified products, at a temperature of about 60°C, fall out.

At region F, by applying a brush roller to the internal faces of the open molds, any products still remaining in the mold cavities can be brushed out.

At region G, by spraying the molds with a cleaning solution and hot water and using a brush, the molds are cleaned first while open and then while closed, and then the closed molds are moved up to the upper run of the tracks 103 and righted by the discs 131 and the entire process is repeated.

During the heating and solidifying of the products, the fish paste is heated separately in each mold and the fish paste itself reaches a temperature of 50 to 60°C, at which temperature the fish paste solidifies. If, however, fish-paste food products are only heated to a temperature of 50 to 60°C, a part of the solidified product will revert to a gel. For this reason, it is necessary to heat the fish-paste food products to approximately 90°C. If this is done in the same mold, an extended length of time is required for the heating and cooking, thus increasing the number of molds needed and consequently increasing the cost of the production equipment.

Thus, removing the products from the molds when the fish paste reaches a temperature of 50 to 60°C, at which point it becomes possible to separate the products from the molds, and thereafter using a separate heating apparatus to heat them to the prescribed temperature, is extremely advantageous from the viewpoint of the turn-around efficiency of the production equipment. In other words, by combining heating by means of far-infrared rays, or gas burners, or a combination thereof, with steam heating, and adjusting the heating ratio, it is possible to obtain an extremely appetizing product closely resembling real shrimp.

If any one of these three heating methods (steam, far-infrared rays, or gas burners) is used alone, the products will either be too dry or there will be too much moisture, thus making it difficult to achieve the appetizing qualities of real shrimp, lobster, crab, etc.

Using the apparatus described, ground fish meat can be processed into a high-grade seafood product with the special appearance of the shelled meat crustacean animals. The simulated food products achieved using this apparatus closely resemble the real thing in shape, color, texture, and taste, and products of uniform size and quality can be readily supplied to the consumer.

Note that, because the fish paste is injected into the molds and heated with the injection ports remaining open, it is possible to obtain shapes which exactly resemble the shelled meat of especially shrimp from which the head has been removed, and, because means is provided to prevent the molds from opening during the injection of the fish paste, uniform products closely resembling the real thing can be obtained. Quality too, closely resembles that of real shellfish as a result of secondary heating. In addition, because the production process is carried out while the molds are being moved by a transport apparatus, albeit stepwise, continuous working is possible even though each process is a batch system, thus achieving extremely effective production.

## Claims

1. Apparatus for producing a molded food product with the appearance of the shelled meat of a crustacean, comprising a split mold (10, 101) with at least one internal cavity (11, 111) having the shape of the shelled crustacean to be molded, and a fill opening (17, 112) through which fishmeat paste is charged into the mold cavity, characterised by a fixed quantity filling unit (42, 43; 108) adapted to be applied to the fill opening of the mold to charge the mold cavity with a predetermined amount of fishmeat paste, and further characterised in that the walls of the mold cavity are formed by flat portions (12) separated by striations (13), one end of the mold cavity thus shaped to mold the simulated crustacean extends right out to the external surface of the mold to form the fill opening, whereby the fishmeat paste in the fill opening forms one end of the molded product without waste, and the other end of the mold cavity terminates in a vent (18, 113) opening at the external surface of the mold.

2. Apparatus according to Claim 1, further including spraying means (36) for spraying an aqueous coloring agent into said mold cavity before the mold cavity is charged with fishmeat paste.

3. Apparatus according to Claim 1 or Claim 2, wherein said mold cavity walls are lined with a non-stick plastics material.

4. Apparatus according to Claim 1 or Claim 2 or Claim 3, further including heating means (67) for heating the mold, after the mold cavity has been charged with fishmeat paste and the filling unit removed to leave the fill opening uncovered, to solidify the paste in the mold cavity to form said food product.

5. Apparatus according to any preceding claim, wherein said filling unit includes a piston (63, 185) for extruding a fixed amount of said fishmeat paste.

6. Apparatus according to any preceding claim, including means (68; 132, 102, 153, 154) for turning upside down and opening the mold, after molding of the food product, to allow the food product to drop out.

7. Apparatus according to Claim 6, further including rotary brush means applied to the cavity surfaces of the inverted and opened mold to remove any food product that does not drop out.

8. Apparatus according to any preceding claim, comprising a succession of said molds which have their mold cavities charged with fishmeat paste one after another to produce a succession of food products.

9. Apparatus according to Claim 8, further comprising transporter means (103, 104, 131, 132) for transporting the molds stepwise in succession to a station (B) where a coloring agent is injected into each mold cavity, then to a filling station (C) where each mold cavity is charged with fishmeat paste, and next to a heating station (D) where heat is applied externally to each mold to solidify the paste, the transporter means then inverting each mold and transporting it through an unloading station (E) where it is opened to unload the food product, followed by brushing and washing stations (F, G) where the mold is cleaned and re-closed ready for re-inversion into the upright position and re-use.

10. Apparatus according to Claim 9, wherein the transporter means comprises tracks (103) defining upper and lower runs of an endless transport path, first stepwise rotary drive means (131) at one end of the tracks for raising each mold in turn from the lower run to the upper run and at the same time turning it over, and second stepwise rotary drive means (132) at the opposite end of the tracks for lowering each mold in turn from the upper run to the lower run and at the same time turning it over.

11. Apparatus according to Claim 10, wherein the coloring agent injection, filling and heating stations (B, C, D) are located at regions along the upper run of the transport path and the unloading and cleaning stations (E, F, G) are located at regions along the lower run of the transport path.

12. Apparatus according to Claim 10 or Claim 11, wherein along the upper run of the transport path the molds travel by being pushed along the tracks in a closed rank by said first rotary drive means, and a conveyor belt (104) is provided to move the molds along the lower run at a faster rate and spaced apart from one another.

13. Apparatus according to any preceding claim, wherein a row of identical mold cavities are provided in a single split mold and the filling unit has multiple filling nozzles (58, 109) for charging all the mold cavities simultaneously each with a predetermined amount of fishmeat paste.

14. Apparatus according to any of Claims 9 to 12, wherein each mold is elongated in a direction transverse to the direction of transport and contains a row of identical mold cavities, and rows of injection and filling nozzles are provided at the coloring agent injection and filling stations, respectively, for simultaneously injecting coloring agent into every cavity of a mold at the coloring agent injection station and simultaneously charging every cavity of the mold with fishmeat paste at the filling station.

15. Apparatus according to Claim 13 or Claim 14, comprising means (191) for lowering and pressing the filling nozzles (109) on to the fill openings of a mold, when it is in position for its mold cavities to be charged, and for lifting the filling nozzles away from the mold after charging, said apparatus including levers (197) operating to grip the sides of the mold during charging.

16. A process for molding a food product having the appearance of the shelled meat of a crustacean, comprising providing a split mold with a mold cavity formed to the shape of the crustacean, charging the mold cavity with fishmeat paste, heating the paste in the mold cavity and then opening the mold to remove the food product, characterised in that to simulate the jointed body of the crustacean the walls of the mold cavity are formed by flat portions separated by ribs or striations, one end of the mold cavity so formed extends right out to and is open at the surface of the mold to provide a fill opening without the need for a mold runner and the other end of the mold cavity communicates with a mold vent, and a food product coloring agent is injected into the mold cavity through the fill opening before the mold cavity is charged with fishmeat paste after which a sufficient predetermined quantity of paste is pressed into the mold cavity to fill it through the fill opening by a filling unit that is removed from the mold after charging so that during the heating step the fill opening is uncovered.

17. A process according to Claim 16, where after the food product has been removed from the opened mold it is further heated by a heating apparatus different from that employed while the food product is in the mold.

**Revendications**

1. Appareil pour produire un produit alimentaire moulé, ayant l'apparence d'une chair de carapace de crustacé, comprenant un moule divisé (10,101), avec au moins une cavité intérieure (11,111) ayant la forme du crustacé à carapace devant être moulé, et une ouverture de remplissage (17,112) par laquelle on charge la pâte de chair de poisson dans la cavité de moulage, caractérisé par une unité de remplissage fournissant une quantité fixée (42,43;108) adaptée pour être appliquée sur l'ouverture de remplissage du moule, pour charger la cavité de moule avec une quantité prédéterminée de pâte de chair à poisson, et caractérisé en outre en ce que les parois de la cavité de moulage sont formées par une partie plate (12) séparée par des stries (13), une extrémité de la cavité de moulage, étant ainsi formée pour mouler le crustacé imité, s'étendant hors de la surface extérieure du moule, pour former l'ouverture de remplissage, de manière que la pâte de chair à poisson située dans l'ouverture de remplissage forme une extrémité du produit moulé sans qu'il y ait de perte, et l'autre extrémité de la cavité de moulage finissant en un évent (18,113) qui débouche sur la surface extérieure du moule.

2. Appareil selon la revendication 1, comprenant en outre des moyens de pulvérisation (36), pour pulvériser un agent aqueux colorant dans ladite cavité de moulange avant de charger cette dernière avec la pâte de chair à poisson.

3. Appareil selon la revendication 1 ou 2, caractérisé en ce que lesdites parois de cavité de moulage sont revêtues d'une matière synthétique non adhésive.

4. Appareil selon la revendication 1, 2 ou 3, comprenant en outre des moyens de chauffage (67), pour chauffer le moule, une fois que la cavité de moulage a été chargée en pâte de chair à poisson et que l'unité de remplissage a été enlevée, pour laisser à découvert l'ouverture de remplissage, pour solidifier la pâte située dans la cavité de moulage, pour former ledit produit alimentaire.

5. Appareil selon l'une quelconque des revendications précédentes, dans lequel ladite unité de remplissage comprend un piston (63,185) pour extruder une quantité fixée de ladite pâte de chair à poisson.

6. Appareil selon l'une quelconque des revendications précédentes, comprenant des moyens (68,132,102,153,154) pour tourner tête en bas et ouvrir le moule, après moulage du produit alimentaire, pour permettre à ce dernier de se démouler.

7. Appareil selon la revendication 6, comprenant en outre des moyens de brosse rotative, appliqués aux surfaces de cavité du moule inversé est ouvert, pour enlever toute trace de produit alimentaire qui ne serait pas parti au démoulage.

8. Appareil selon l'une quelconque des revendications précédentes, comprenant une succession dedits moules, dont les cavités de moulage sont chargés avec de la pâte de chair à poisson, les uns après les autres, pour produire une succession de produits alimentaires.

9. Appareil selon la revendication 8, comprenant en outre des moyens de transport (103,104,131,132), pour transporter les moules, par étapes, en succession, à un poste (B) où un agent colorant est injecté dans chaque cavité de moulage, puis à un poste de remplissage (C), où chaque cavité de moulage est chargée de pâte de chair à poisson, et ensuite à un poste de chauffage (D), où de la chaleur est appliquée extérieurement à chaque moule, pour solidifier la pâte, les moyens de transport procédant ensuite au basculement de chaque moule et les transportant dans un poste de déchargement (E) où ils sont ouverts pour décharger le produit alimentaire, suivi par les poste de brossage et de lavage (F,G), où le moule est nettoyé et refermé, prêt à un nouveau basculement en position debout et à une réutilisation.

10. Appareil selon la revendication 9, dans lequel les moyens de transport comprennent des pistes (103) qui définissent des passages supérieur et inférieur d'une trajectoire de transport continue, un premier moyen d'entraînement rotatif en pas-à-pas (131), à une extrémité des pistes, pour monter chaque moule à son tour, du passage inférieur au passage supérieur et en même temps pour le retourner, et un second moyen d'entraînement rotatif en pas-à-pas (132), à l'extrémité opposée des pistes, pour abaisser chaque moule à son tour, du passage supérieur au passage inférieur, et en même temps pour le retourner.

11. Appareil selon la revendication 10, dans lequel les postes d'injection d'agent colorant, de remplissage et de chauffage (B, C, D) sont situés en des zones du passage supérieur de la trajectoire de transport et les postes de déchargement et de nettoyage (E, F, G) sont situés sur des zones du passage inférieur de la trajectoire de transport.

12. Appareil selon la revendication 10 ou 11, dans lequel , sur le passage supérieur de ta trajectoire de passage, les moules passent en étant poussés sur les pistes, en rang serré, par le premier moyen d'entraînement rotatif, et une courroie de transporteur (104) étant prévue pour déplacer les moules sur le passage inférieur, à une vitesse supérieure et espacés les uns des autres.

13. Appareil selon l'une quelconque des revendications précédentes, dans lequel une série de cavités de moulage identiques sont prévues dans un seul moule divisé et l'unité de remplissage présentent de multiples buses de remplissage (58,109) pour charger toutes les cavités de moulage simultanément, chacune avec une quantité prédéterminée de pâte de chair à poisson.

14. Appareil selon l'une quelconque des revendications 9 à 12, dans lequel chaque moule est allongé dans une direction transversale par rapport à la direction du transport et contient une série de cavité de moulage identiques, et des séries de buses d'injection et de remplissage étant prévues aux postes d'injection d'agent colorant et de remplissage, respectivement, pour injecter simultanément l'agent colorant dans chaque cavité d'un moule, sur le poste d'injection d'agent colorant, et procéder simultanément au chargement de chaque cavité du moule en pâte de chair à poisson, sur le poste de remplissage.

15. Appareil selon la revendication 13 ou 14, comprenant des moyens (191) pour abaisser et presser les buses de remplissage (109) sur les ouvertures de remplissage d'un moule, lorsqu'il est en position de chargement de ses cavités de moulage, et pour soulever les buses de remplissage à l'écart du moule après le chargement, ledit appareil comprenant des leviers (197) qui agissent pour saisir les faces du moule durant le chargement.

16. Procédé pour mouler un produit alimentaire ayant l'apparence d'une chair de carapace de crustacé, comprenant la fourniture d'un moule divisé, avec une cavité de moulage, ayant la forme du crustacé, le chargement de la cavité de moulage avec de ta pâte de chair de poisson; le chauffage de la pâte située dans la cavité de moulage et ensuite l'ouverture du moule pour enlever le produit alimentaire, caractérisé en ce que, pour imiter le corps articulé du crustacé, les parois de la cavité de moulage sont formées par des parties plates, séparées par des nervures ou des stries, une extrémité de la cavité de moulage ainsi formée s'étendant en passant à l'extérieur et débouchant à la surface du moule, pour produire une ouverture de remplissage, sans besoin, d'un curseur de moule, et l'autre extrémité de la cavité de moulage communiquant avec un évent de moule, et un agent colorant du produit alimentaire étant injecté dans la cavité de moulage, par l'ouverture de remplissage, avant que la cavité de moulage soit chargée de pâte de chair à poisson, avec une quantité prédéterminée suffisante de pâte pressée dans ta cavité de moule, pour le remplir par l'ouverture de remplissage, à l'aide d'une unité de remplissage qui est enlevée du moule après le chargement, de sorte que l'ouverture de remplissage soit à découvert lors de l'étape de chauffage.

17. Procédé selon la revendication 16, dans lequel, après que le produit alimentaire ait été enlevé du moule ouvert, il est ensuite chauffé à l'aide d'un appareil de chauffage, différent de celui utilisé pendant que le produit alimentaire est dans le moule.

**Patentansprüche**

1. Vorrichtung zur Herstellung eines geformten Nahrungsmittelprodukts mit dem Aussehen des geschälten Fleischs eines Krebstiers, mit einer zweiteiligen Form (10, 101) mit wenigstens einem inneren Nest (11, 111) in der Form des zu formenden, geschälten Krebstiers, und einer Einfüllöffnung (17, 112), durch die die Fischfleischpaste in das Formnest eingefüllt wird, gekennzeichnet durch eine Befülleinheit (42, 43; 108) für eine feste Einfüllmenge, die an die Einfüllöffnung der Form gebracht werden kann, um dem Formnest eine vorbestimmte Menge von Fischfleisch zuzuführen, und weiterhin dadurch gekennzeichnet, daß die Wände des Formnests durch flache, durch Riefen (13) getrennte Bereiche gebildet werden, wobei ein Ende des so geformten Formnests zum Formen des simulierten Krebstiers sich ganz nach außen zur Außenfläche der Form erstreckt und so die Einfüllöffnung bildet, wodurch die Fischfleischpaste in der Einfüllöffnung ein Ende des geformten Produkts ohne Abfall bildet, und wobei das andere Ende des Formnests in einer Lüftungsöffnung (18, 113) an der Außenfläche der Form endet.

2. Vorrichtung nach Anspruch 1, dadurch gekennzeichnet, daß Sprühmittel (36) zum Einsprühen eines wäßrige Färbemittels in das Formnest vor Befüllen des Formnests mit Fischfleischpaste vorgesehen sind.

3. Vorrichtung nach Anspruch 1 oder 2, dadurch gekennzeichnet, daß die Wände des Formnests mit einem Anti-Haft-Kunststoff beschichtet sind.

4. Vorrichtung nach Anspruch 1, 2 oder 3, dadurch gekennzeichnet, daß Heizmittel (67) zum Beheizen der Form vorgesehen sind, nachdem das Formnest mit Fischfleischpaste befüllt und die Befülleinheit entfernt worden ist, wodurch die Einfüllöffnung frei ist, um die Paste im Formnest zwecks Erzielen des besagten Nahrungsmittelprodukts zu verfestigen.

5. Vorrichtung nach einem der vorhergehenden Ansprüche, dadurch gekennzeichnet, daß die Befülleinheit einen Kolben (63, 185) zum Extrudieren einer festen Menge der besagten Fischfleischpaste aufweist.

6. Vorrichtung nach einem der vorhergehenden Ansprüche, dadurch gekennzeichnet, daß Mittel (68; 132, 102, 153, 154) zum Umdrehen und öffnen der Form vorgesehen sind, damit das Nahrungsmittelprodukt herausfallen kann, wenn das Nahrungsmittelprodukt geformt ist.

7. Vorrichtung nach Anspruch 6, dadurch gekennzeichnet, daß an den Formnestoberflächen der umgedrehten und geöffneten Form Bürstmittel vorgesehen sind, damit nicht herausgefallenen Nahrungsmittelreste entfernt werden können.

8. Vorrichtung nach einem der vorhergehenden Ansprüche, dadurch gekennzeichnet, daß eine Folge der besagten Formen vorgesehen ist, deren Formnester nacheinander mit Fischfleischpaste befüllt werden, um somit eine Folge von Nahrungsmittelprodukten zu erzeugen.

9. Vorrichtung nach Anspruch 8, dadurch gekennzeichnet, daß Transportmittel (103, 104, 131, 132) zum schrittweisen Transportieren der Formen in Folge zu einer Station (B), wo ein Färbemittel in jedes Formnest eingebracht wird, dann zu einer Befüllstation (C), wo jedes Formnest mit Fischfleischpaste befüllt wird, und dann zu einer Heizstation (D), wo Hitze außen auf jede Form zum Verfestigen der Paste aufgebracht wird, vorgesehen sind, wobei die Transportmittel dann jede Form umdrehen und sie durch eine Entnahmestation (E) transportieren, wo sie zur Freigabe des Nahrungsmittelprodukts geöffnet werden, gefolgt von Abbürst- und Waschstationen (F, G), wo die Form gereinigt und wieder geschlossen wird, woraufhin sie wieder in die aufrechte Stellung umgedreht und wiederbenutzt werden kann.

10. Vorrichtung nach Anspruch 9,
dadurch gekennzeichnet, daß das Transportmittel Bahnen (103) aufweist, die die obere und die untere Bahn eines endlosen Transportwegs definieren, erstens schrittweise arbeitende Drehantriebsmittel (131) an einem Ende der Bahnen zum Anheben jeder Form von der unteren Bahn auf die obere Bahn, wobei sie gleichzeitig umgedreht werden, und zweitens schrittweise arbeitende Drehantriebsmittel (132) am entgegengesetzten Ende der Bahnen zum Absenken jeder Form von der oberen Bahn auf die untere Bahn, wobei sie gleichzeitig umgedreht werden.

11. Vorrichtung nach Anspruch 10,
dadurch gekennzeichnet, daß die Färbemitteleinbring-, Befüll- und Heizstationen (B, C, D) in Bereichen entlang der oberen Bahn des Transportwegs und die Entnahme- und Reinigungsstationen (E, F, G) in Bereichen entlang der unteren Bahn des Transportwegs angebracht sind.

12. Vorrichtung nach Anspruch 10 oder 11,
dadurch gekennzeichnet, daß die Formen entlang der oberen Bahn des Transportwegs laufen, indem sie von besagten ersten Drehantriebsmitteln in einer geschlossenen Rangfolge geschoben werden, und daß ein Transportband (104) zum Bewegen der Formen in einer höheren Geschwindigkeit und im Abstand voneinander entlang der unteren Bahn vorgesehen ist.

13. Vorrichtung nach einem der vorhergehenden Ansprüche,
dadurch gekennzeichnet, daß eine Reihe von identischen Formnestern in einer einzigen zweigeteilten Form vorgesehen ist und daß die Befülleinheit mit mehrfachen Befülldüsen (58, 109) zum gleichzeitigen Befüllen aller Formnester jeweils mit einer vorbestimmten Menge von Fischfleischpaste versehen ist.

14. Vorrichtung nach einem der Ansprüche 9 bis 12,
dadurch gekennzeichnet, daß jede Form in einer Richtung quer zur Transportrichtung verbreitert ist und eine Reihe von identischen Formnestern aufweist, und daß Reihen von Sprüh- und Befülldüsen jeweils an den Färbemitteleinsprüh- und Befüllstationen zum gleichzeitigen Einsprühen eines Färbemittels in jedes Formnest an der Färbemitteleinsprühstation und Befüllen jedes Formnests mit Fischfleischpaste an der Befüllstation vorgesehen sind.

15. Vorrichtung nach Anspruch 13 oder 14,
dadurch gekennzeichnet, daß Mittel (191) zum Absenken und Anpressen der Düsen (109) auf die Einfüllöffnungen einer Form, wenn die Form sich in einer Stellung befindet, in der ihre Formnester befüllt werden können, und nach dem Befüllen zum Anheben der Befülldüsen von der Form weg vorgesehen sind, wobei die besagte Vorrichtung Hebel (197) aufweist, die die Seiten der Form während des Befüllens erfassen.

16. Verfahren zur Herstellung eines geformten Nahrungsmittelprodukts mit dem Aussehen des geschälten Fleischs eines Krebstiers, wobei eine zweiteilige Form mit einem inneren Nest in der Form des zu formenden, geschälten Krebstiers vorgesehen ist, das Formnest mit Fischfleischpaste befüllt wird, die Paste im Formnest erhitzt wird und dann die Form zum Entnehmen des Nahrungsmittelprodukts geöffnet wird,
dadurch gekennzeichnet, daß die Wände des Formnests zum Simulieren des Körpers des Krebstiers durch flache, durch Rippen oder Riefen getrennte Bereiche gebildet werden, wobei ein Ende des so geformten Formnests sich ganz nach außen zur Außenfläche der Form erstreckt und an der Außenfläche der Form offen ist, wodurch eine Einfüllöffnung gebildet wird, ohne daß ein Formbefüllungskanal entsteht, und wobei das andere Ende des Formnests mit einer Lüftungsöffnung in Verbindung steht, und daß ein Färbemittel für das Nahrungsmittelprodukt durch die Einfüllöffnung in das Formnest eingesprüht wird, bevor das Formnest mit Fischfleischpaste befüllt wird, woraufhin dann von einer Befülleinheit eine genugende, vorbestimmte Menge von Paste durch die Einfüllöffnung in das Formnest gepreßt wird, wobei die Befülleinheit nach Befüllen der Form entfernt wird, sodaß die Einfüllöffnung während des Heizvorgangs frei ist.

17. Verfahren nach Anspruch 16,
dadurch, gekennzeichnet, daß das Nahrungsmittelprodukt, nachdem es aus der offenen Form entnommen worden ist, von einer anderen Heizvorrichtung als der, die benutzt wird, wenn das Nahrungsmittelprodukt sich in der Form befindet, weiter erhitzt wird.

18
17
12

_FIG_1_

13

22

15

18
11
10

_FIG_2_

21

15

14

_FIG_3_

24

FIG_4_

FIG_5_

FIG-6-

FIG-7-

_FIG_ _8_

_FIG_ _10_

EP 0 239 203 B1

FIG-9-

Fig. 11

Fig. 12

Fig. 13

Fig_14_

Fig. 15.

_FIG_16_

FIG-17

FIG-18

EP 0 239 203 B1